Europäisches Patentamt

European Patent Office

Office européen des brevets

(19)

(11) Publication number: **0 498 287 B1**

# EUROPEAN PATENT SPECIFICATION

(12)

(45) Date of publication of patent specification: **17.05.95**  (51) Int. Cl.⁶: **B60C 11/04**

(21) Application number: **92101439.5**

(22) Date of filing: **29.01.92**

(54) **Radial tyre having a tread with transversal grooves inclined with respect to a normal (N) to the tread surface.**

(30) Priority: **07.02.91 US 652412**

(43) Date of publication of application:
**12.08.92 Bulletin 92/33**

(45) Publication of the grant of the patent:
**17.05.95 Bulletin 95/20**

(84) Designated Contracting States:
**DE ES FR GB IT LU**

(56) References cited:
**FR-A- 2 643 312**
**GB-A- 2 093 777**
**US-A- 4 298 046**

(73) Proprietor: **MICHELIN RECHERCHE ET TECH-NIOUE S.A.**
**Euro-résidence**
**Grand-Places 14 A**
**CH-1700 Fribourg (CH)**

(72) Inventor: **Enterline, Gary Dean**
**108, Shoals Road**
**Greer, S.C. 29651 (US)**
Inventor: **de Reynal de Saint-Michel, Michel A.**
**103, Greenfield Drive**
**Greenville, S.C. 29615 (US)**

(74) Representative: **Devaux, Edmond-Yves**
**Michelin & Cie**
**Service SRK. Brevets**
**23, Place des Carmes**
**F-63040 Clermont-Ferrand Cédex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to the improvements in treads of tyres used for ground vehicles, such as passenger cars and light trucks. It concerns particularly a tread with at least three circumferential ribs bounded by circumferential grooves, each rib having a plurality of transversally extending grooves that define a plurality of tread blocks in series within each rib.

Generally, the transversal grooves have walls or sides approximately normal to the tread surface. In average running conditions and on the driving axle of a passenger car or light truck, the tread, as above described, usually has center wear and on the non-drive axle the critical wear is the heel-and-toe wear on shoulder (or lateral) tread blocks.

The problem forming the basis of the invention is to improved the wear resistance of the tread by overcoming the tendency for uneven tyre wear.

The purpose of this invention is to modify the tangential stresses on the tread blocks to achieve even wear and longer tyre life, and, to achieve this purpose, the invention proposed the inclination of transversal grooves within each zone across the width of the tyre tread, and a prescribed way to rotate the tyre on the vehicle during its forward notion.

Numerous patents use inclined transversal grooves to improve traction. The patent US 4,298,046 by Herbelleau et al includes slits that are inclined with respect to a normal to the tread and closely spaced between transversal grooves to give improved adherence upon braking or acceleration. Slits inclined in a direction of rotation (forward) were located in the two lateral zones of the tyre width while those in the canter zone were inclined in an opposite direction. Under load, the tyre starts to become worn to cause directed wear of the tyre contact surface, typical of heel-toe wear. The forward inclined slits were designed to be active in longitudinal acceleration (driving) and slits in the opposite direction were designed to be active in braking.

The French patent FR 1 548 673 by Devienne shows saw-tooth tread block elements having oblique faces or teeth on one of the bands (ribs) being crossed with regard to the oblique faces or teeth of the adjacent band (rib). The two bands are separated by a groove parallel to the equatorial plane. The purpose of the invention is to improve driving as well as braking adhesion by alternating oblique faces across the tread width. The same tyre would be used on all axles of the vehicle.

The German Utility Model DE 8707957 by Frisch has scales, or short tread blocks, arranged circumferentially in rows. Circumferential grooves between rows of tread block form circumferential ribs. A sharp leading edge on the tread block improves the driving traction of each tread block. Alternating ribs or rows having leading and trailing sharp edges respectively, provide both forward and reverse driving assistance. The same tyre is used on all axles of the vehicle.

The above prior art has for its object to improve adherence on different grounds, and in order to meet this object, these patents, particularly US 4,298,046, teach to produce uneven wear.

In the case of a heavy vehicle tyre, intended to make long trips as sustained speed and as a consequence, intended to be inflated at relatively high pressures, greater than 5 bars, the tread of which comprises a plurality of circumferential grooves and transversal incisions, the vehicle running gives rise to an irregular wear which develops more rapidly on the surface located on the side of the trailing edge of a block. To avoid this irregular wear, the French application 2 643 312 claims a tyre according to the preamble of claim 1 with a tread having transverse incisions inclined by an angle of 5° and 25° with respect to the direction perpendicular to the tread surface, so that the resultant force exerted upon running in the ellipse of contact by the ground on the tread tends to straighten the incisions toward a zero inclination with respect to said perpendicular to the tread, the said inclination of incisions being combined with a given radius of transverse curvature of the tread. This application does not take into account the difference apt to occur between the central zone and the lateral zones of a tread for passenger cars.

According to the present invention, a pneumatic radial tyre, mounted on a drive axle of a vehicle, comprising a circumferential tread reinforcement, subtread rubber and tread rubber all on a radially reinforced carcass between two bead rings with a tread design comprising at least three circumferential ribs bounded by circumferential grooves wherein said ribs each have a plurality of transversally extending grooves that define a plurality of tread blocks in series within each rib, characterized by the fact that

a) the transversal grooves in the two lateral zones of the tread width are inclined with respect to an outer normal (N) to a tread surface defining inclined tread blocks, and each inclined tread block having a leading edge such that the angle between the leading side surface of said inclined block and the surface of the tread be an acute angle ;

b) the transversal grooves in the center zone of the tread width are reverse inclined with respect to the outer normal to said tread surface, defining reverse inclined tread blocks.

A tyre, with a tread having grooves the inclinations of which are different, can be used on a non-drive axle of the vehicle. According to the present invention, the radial tyre is, in that case, characterized by the fact that

a) the transverse grooves in the two lateral zone of the tread width are inclined with respect to an outer normal to a tread surface, defining inclined tread block ;

b) the transversal grooves in the center zone of the tread width are reverse inclined with respect to the outer normal to said tread surface, defining reverse inclined tread block having a leading edge such that the angle between the leading said surface of said reverse inclined blocks and the surface of the tread be an acute angle.

The invention utilizes sloping tread blocks to change the relative tangential stress on the tread blocks in the center zone of the tread width compared with those in the lateral zones. The center zone is the zone centered on the equatorial plane of the tyre and between the two circumferential grooves, nearest the said equatorial plane. The lateral zones are the zones between the tread edges and the circumferential grooves farthest from the equatorial plane of the tyre.

The desire for the drive axle is to achieve a relatively uniform longitudinal tangential stress on all the circumferential ribs of the tread design. Classically the center zone of the tread width has a longidudinal tangential stress which is biases toward driving, or increasing the vehicle speed, relative to the lateral zones which are biased toward braking the vehicle. To make the center zone more braking, the transversal grooves are reverse inclined to provide reverse inclined tread blocks. Inversely, to make the lateral zones more driving the transversal grooves are inclined to provide inclined tread blocks. Furthermore, a result of both inclined and reverse inclined tread blocks is to increase the tyre circumference in one zone of the tyre and decrease the circumference in other zone, due to differences in tread block mobility and the deflection of the steel belts. This increase or decrease also changes the relative magnitude of tangential stresses in the center zone of the tyre compared with lateral zones.

The reversal of rotation used for the non-drive axle tyre increases the driving bias of the center zone of the tyre width as well as the braking bias of the lateral zones. Although tangential stresses are not uniform, the tyre wear, being more regular and even, was improved significantly for this rotation when compared with the rotation used for a drive axle tyre. The stress distribution between the normal stress, the longitudinal tangential stress and the lateral tangential stress on each block are such that uneven wear is reduced.

The tread design of preferred embodiments are illustrated, discussed and described below. It concerns embodiments not limiting the scope of the invention. The configuration of each circumferential and transversal groove and the definition of tread blocks so generated by said grooves can be altered and still remain within the scope of the invention.

Embodiments of the invention will now be described by way of illustration with reference to the accompanying drawings, in which

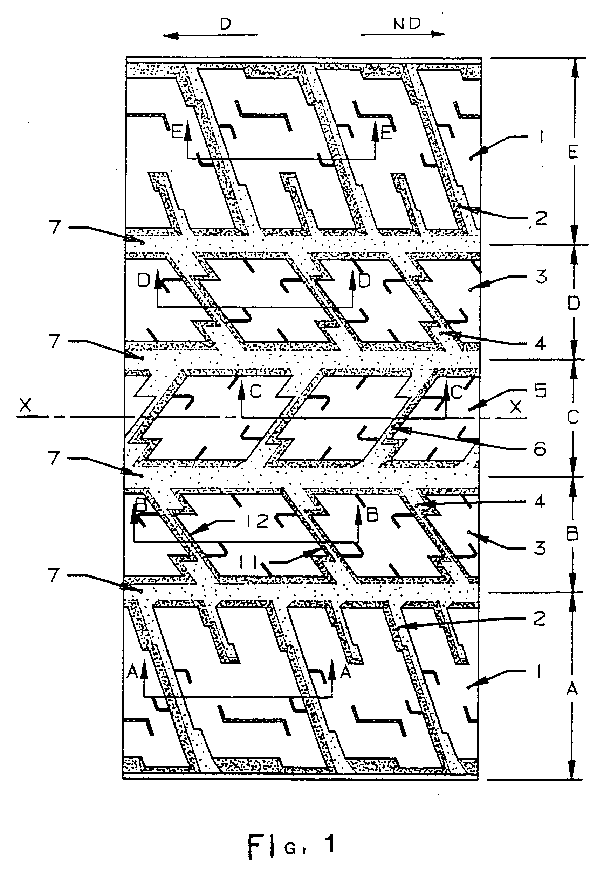

. Figure 1 is an illustration of a segment of the top view of a preferred embodiment tyre showing the configuration of each groove ;

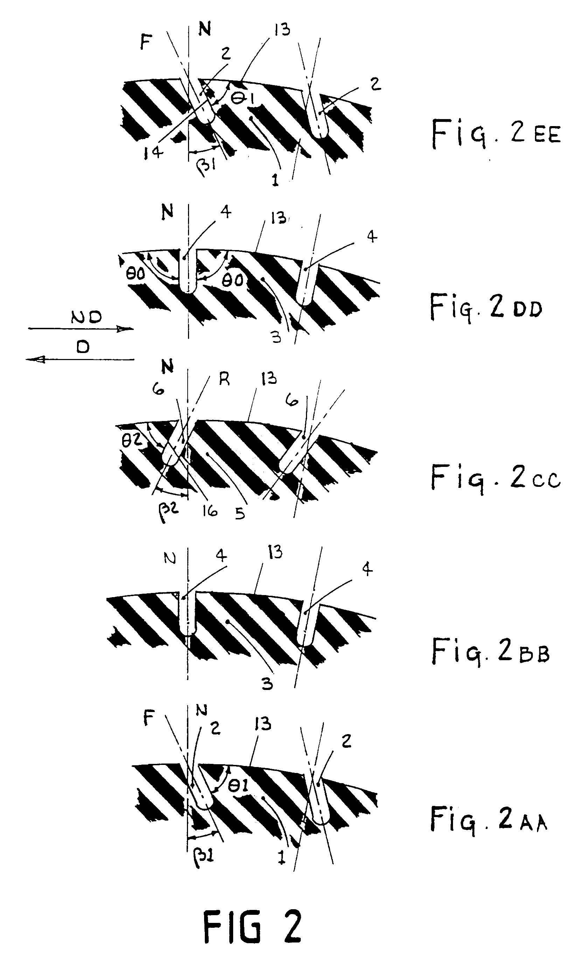

. Figure 2 has five parts AA-EE showing sectional views of the tread area parallel to the mid-circumferential plane X-X for each of the five circumferential ribs of the preferred embodiment tyre of Figure 1 ;

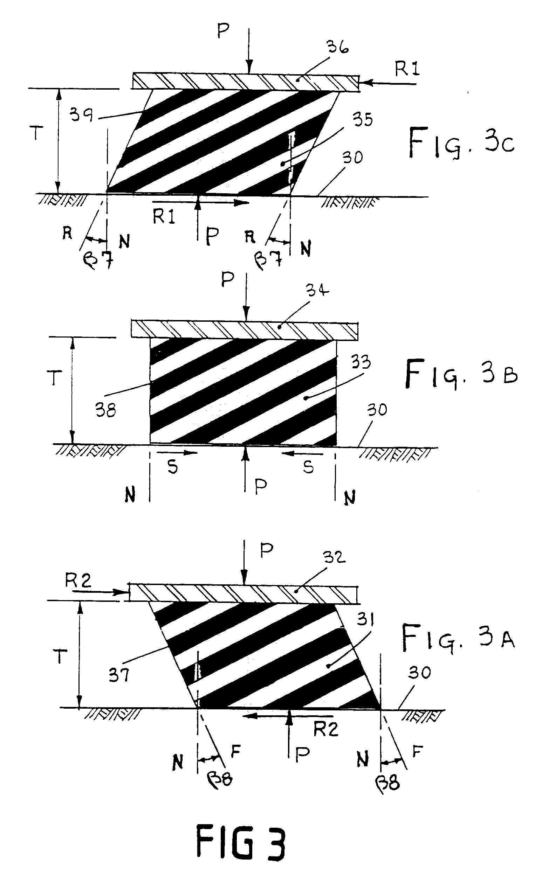

. Figure 3 has three parts A-C showing each end view of three rubber block prismatoids loaded on a flat surface to represent a physical mechanism that helps illustrate force changes obtained with the invention ;

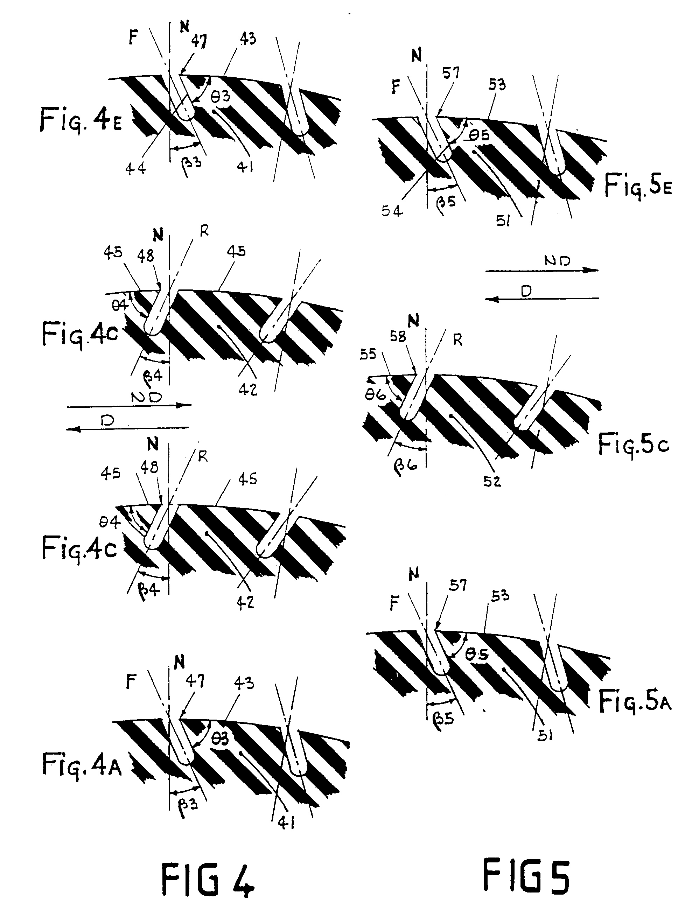

. Figure 4 has four parts A, C, C and E showing sectional views of the tread area parallel to a mid-circumferential plane, for each of the four ribs of a four rib tyre similar to that illustrated in Figure 1 ; and

. Figure 5 has three parts A, C and E showing sectional view, parallel to a mid-circumferential plane, of the tread area of a three rib tyre similar to that illustrated in Figure 1 for each of the three tread ribs.

The five rib tread design of Figure 1 illustrates a typical five rib design for a passenger car tyre. Circumferential grooves 7 define the five ribs. These grooves are straight in this design but can be zig zag or curvilinear and vary in width and contour within the scope of this invention. The two lateral zones A and E have lateral ribs, a center zone C has the center rib and two intermediate zones B and D have intermediate ribs. Each rib is divided laterally by transversal grooves to form tread blocks 1, 3 and 5. Transversal grooves 2, 4 and 6 are straight, having a variable width in this design, but can be zig zag or curvilinear including a constant width and variable contour within the scope of this invention. The direction of rotation of the tread design is critical for improved performance of the tyre. This is a result of the transvrsal groove 2 of the shoulder ribs 1 having a different slope that the transversal groove 6 of the center rib 5. As viewed from the top of the tyre, the vehicle direction defined by the arrow D is appropriate for the drive axle or the vehicle. In this case, each tread block left edge 12 is leading and the right edge 11 is trailing. For the non-drive axle tyre the vehicle direction defined by the arrow ND is appropriate, and each tread block left edge 12 is trailing where the right edge 11 becomes a leading edge. A simple reverse mounting of the tyre on the wheel will position it for a drive axle or a non-drive axle rotation.

The cross-sections of Figure 2 (AA-EE) show details on the transversal grooves. Figures 2AA and 2EE are for sections A-A and E-E respectively of Figure 1. These transversal grooves 2 are inclined within the two lateral zones A and E of the tread width. The central axis F of each transversal groove makes an incline angle $\beta1$ with respect to an outer normal N to the tread surface 13. The series of inclined grooves 2 define inclined tread blocks 1 that form each lateral rib. The leading side surface 14 of each inclined groove 2 makes an acute angle $\theta1$ with a contact surface 13 of the inclined tread block 1. As well known, the leading side surface (14) is the side surface of the block which makes first contact with the ground when the tyre is rolling.

Figure 2CC is for section C-C where the transversal grooves are reverse inclined grooves 6 within the center zone C of the tread width. The central axis R of the transversal groove makes a reverse incline angle $\beta2$ with respect to an outer normal N to the tread surface 13. The series of reverse inclined grooves 6 define reverse inclined tread blocks 5 that form the center rib. The trailing side surface 16 of each reverse inclined groove 6 makes an acute angle $\theta2$ with the contact surface 13 of the reverse inclined tread block 5. The trailing side surface (16) is the side surface of the block which makes last contact with the ground when the tyre is rolling.

Figures 2BB and 2DD are for sections B-B and D-D respectively of Figure 1. The transversal grooves are zero inclined grooves 4 within the two intermediate zones B and D of the tread width. The central axis of each transvesal groove is colinear with the outer normal N to the tread surface 13. The angles $\theta0$ between each side surface of each transversal groove and the tread contact surface 13 are approximately right angles.

The inclined transversal groove angles $\beta1$ and the reverse inclined transversal groove angles $\beta2$ of this five rib tyre of Figures 1 and 2 parts AA, CC and EE have preferred angles between approximately 10 to 35 degrees. Also the relative magnitude of groove angles are selected such that the following relationship is satisfied

$$-1.5 \beta1 < \beta2 < -0.5 \beta1$$

The tyre avove describes is mounted on a drive axle of the vehicle.

A simple reverse mounting of the tyre will change trailing edges of tread blocks to leading edges and inversely. If the preferred embodiment for a drive axle of the vehicle is to have the acute angle $\theta1$ of the inclined tread block 1 as a leading edge and the acute angle $\theta2$ of the reverse inclined tread block 5 as a trailing edge (this is illustrated by vehicle direction arrow D), the preferred embodiment for the non-drive axle is opposite, with acute angle $\theta1$ being on a trailing edge and acute angle $\theta2$ being on a leading edge, as illustrated by vehicle direction arrow ND. Preferred directions with experimental evidence are discussed in more detail in the following section.

Laboratory tests with rubber block samples, that represent one physical mechanism which helps explain the invention, are illustrated in Figures 3 parts A-C. A sectional view of each of three rubber block prismatoid samples is shown. The contact area between the supporting surface 10 and each rubber block is a rectangle. Two rubber blocks 31 and 35 have faces 37 and 39 respectively that are inclined with respect to an outer normal N to the contact area. The first rubber block 31 in Figure 3A is made, with a thickness T and a first slope angle $\beta8$ between an outer normal N to the contact area and a line F parallel to a first face 37, to be similar to inclined tread block 5 of Figure 2CC, where a second slope angle $\beta7$ is measured between an outer normal N and line R parallel to a second face 39. A third rubber block 33 in Figure 3B is made as a prism to have both sides approximately normal N to supporting surface 30 with the same thickness T to be similar to tread blocks 3 of Figures 2BB or 2DD.

When the three rubber blocks 31, 33 and 35 are loaded with load P, using relatively rigid steel plates 32, 34 and 36, different contact forces occur on each rubber block from the supporting surface 30. The average trangential forces and stresses are of interest to this invention. The steel plates model the relatively rigid belt package of the reinforced tyre tread. This tread reinforcement provides a longitudinal restraint, which is modeled by limiting the movement of the steel plates to a vertical displacement. To accomplish this requires the action and reaction of force R2 on the first rubber block 31 and force R1 on the second rubber block 35. The average force R2 is opposite in direction to the average force R1. Forces S on the third rubber block 33 are from Poisson stresses, which average to zero. First and second rubber blocks 31 and 35 also have Poisson stresses, but the average forces are not zero. These differences, as a result of the incline of each rubber block, is the physical mechanism that provides the basis for this invention.

The four cross-sections of Figure 4-A, C, C and E are typical details for a tread design having four circumferential ribs. Cross-sections are parallel to the tire mid-circumferential plane. A typical tread design may be similar to Figure 1 with a center zone formed of two center ribs C having reverse inclined grooves. Sections and two lateral zones A and E shown in Figures 4A and 4E are identical and illustrate inclined transversal groove angles $\beta3$ which form inclined tread blocks 41 of the two lateral ribs. There are two center rib cross-sections, shown in identical Figures 4C and 4C, that have reverse inclined tread blocks 42 defined by reverse inclined groove angles $\beta4$.

Each inclined tread block 41 has an acute angle $\theta3$ between a side surface 44 and a contact surface 43. An edge 47 of said inclined tread block 41 having an acute angle $\theta3$ between a side surfave 44 and a contact surface 43. An edge 47 of said inclined tread block 41 having an acute angle $\theta3$ is first to contact the supported surface (leading edge) during a rotation of the tyre defined by a left vehicle direction shown by the arrow D. If the vehicle reverses direction, shown by arrow ND, this edge 47 is a trailing edge on the tread block 41, being last to contact the supporting surface. An edge 48 of said reverse inclined tread block 42, having an acute angle $\theta4$, is last to contact the supporting surface (trailing edge) during a rotation of the tyre defined by a vehicle direction shown by the direction arrow D. Reversing the vehicle direction, shown by arrow ND, the edge 48 becomes a leading edge. A simple reverse mounting of the tyre will also change trailing edges to leading edges.

The inclined transversal groove angles $\beta3$ and the reverse inclined transversal groove angles $\beta4$ of the four rib tyre tread design of Figure 4 parts A, C, C and E have a preferred value between approximately 10 to 35 degrees. The relative magnitude of groove angles are selected such that the following relationship is satisfied.

$$- 1.5\ \beta3 < \beta4 < - 0.5\ \beta3$$

Mounting the tyre to have the acute angle $\theta3$ of the inclined tread block 41 as a leading edge and the acute angle $\theta4$ of the reverse inclined tread block 42 as a trailing edge is preferred for the vehicle drive axle. This corresponds to a vehicle direction defined by the arrow D. However, the preferred embodiment for the non-drive axle is opposite, with acute angle $\theta3$ being associated with a leading edge, which corresponds to a vehicle direction defined by arrow ND. Preferred directions with experimental evidence for each are discussed in more detail in the following section.

The three cross-sections of Figures 5 parts A, C, and E are typical details for a tread design having three circumferential ribs. These cross-sections are parallel to a tyre mid-circumferential plane similar to those of Figure 3 parts AA, CC and EE. A typical tread design may be similar to Figure 1 without the intermediate ribs of sections B and D. The same discussion is appropriate as above for the remaining sections A, C and E. Sections shown in Figure 5A and 5E are identical and illustrate inclined transversal groove angles $\beta5$, which form inclined tread block 51 of the two lateral ribs. A center rib cross-section shown in Figure 5C has reverse inclined tread block 52 defined by a reverse inclined groove angle $\beta6$. Angles $\beta5$ and $\beta6$ are measured between an outer normal N to the tread surfaces 53 and 55 respectively and the central axis F and R respectively.

Each inclined tread block has an acute angle $\theta5$ between a side surface 54 and a contact surface 53. An edge 57 of said inclined tread block 51, having the acute angle $\theta5$ is a leading edge of the vehicle direction defined by the arrow D and a trailing edge for the reverse vehicle direction defined by the arrow ND. Similarly, edge 58 of said reverse inclined tread block 52, having an acute angle $\theta6$, is a trailing edge for the vehicle direction defined by the arrow D. Furthermore, a simple reverse mounting of the tyre will also change trailing edges to leading edges. Mounting the tyre to have the acute angle $\theta5$ associated with the leading edge and acute angle $\theta6$ associated with the trailing edge is preferred for the vehicle drive axle. Mounting the tyre to have the acute angle $\theta5$ associated with the trailing edge and acute angle $\theta6$ associated with the leading edge is the preferred embodiment for the vehicle non-drive axle. Preferred mounting to give the desired transversal groove angles are verified by experimental evidence in the following section. Inclined transversal groove angles $\beta5$ and reverse inclined transversal groove angle $\beta6$ of the three rib tyre tread design of Figures 5 parts A, C and E have a preferred value between approximately 10 to 35 degrees. The relative magnitude of these groove angles are selected such that the following relationship is satisfied.

$$- 1.5\ \beta5 < \beta6 < - 0.5\ \beta5$$

The detailed description and preferred embodiments of the invention have been reduced to practice, as evidenced by the experimental results discussed below.

A number of passenger car test tyres were made where the transversal grooves forming the tread blocks of lateral ribs have an incline and the transversal grooves forming the tread blocks of the center rib have a reverse incline. These tyres were compared with witness tyres having all radial lateral grooves, or grooves having no incline or reverse incline. Tyres were tested under running conditions of load and pressure on a measuring machine which yields the resultant force per unit area on each tread block as it passes through contact with a supporting surface. Small changes were noted for the normal force per unit area and the lateral tangential force per unit area when comparing the test tyres with the witness tyres. However, the longitudinal tangential force per unit area (or stress) changed dramatically and acutally reversed on some of the circumferential ribs.

The scope of this invention involves the control of the relative magnitude of this longitudinal tangential stress between the various ribs of the tread. Three conditions of torque were investigated to simulate free rolling (zero torque), driving and braking. The test tyres for the first set of tests were rotated such that the leading edge of the <u>inclined</u> tread blocks on both <u>lateral</u> ribs was the acute angle edge being first to contact the supporting surface. The difference between the maximum and minimum resultant longitudinal tangential stress, when comparing each of the 5 ribs, is shown below for the test tyres and the witness tyres. The standard deviation of the five stresses is also shown for each set of data.

| Torque Condition | Difference in maximum and minimum longitudinal tangential stress for 5 ribs $(daN^2/cm)$ | | | |
|---|---|---|---|---|
| | Witness Tire | | Test Tire | |
| | max.-min. | std. dev. | max.-min. | std. dev. |
| Free Rolling | 0.29 | 0.1098 | 0.04 | 0.0147 |
| Braking | 0.31 | 0.1087 | 0.12 | 0.0413 |
| Driving | 0.49 | 0.1798 | 0.18 | 0.0646 |

These results show a much more uniform stress distribution with the test tyre for this first test case.

The test tyres for the second set of tests were rotated such that the leading edge of the <u>reverse inclined</u> tread blocks on the center rib was the acute angle being first to contact the supporting surface. This is simply a reverse rotation of the test tyres when compared with the first test case. Witness tyres were also run with a reverse rotation direction to be consistent. The difference between the maximum and minimum resultant longitudinal tantential stress, when comparing each of the five ribs, is again shown below for the test tyres and the witness tyres. Standard deviations are also shown.

| Torque Condition | Difference in maximum and minimum longitudinal tangential stress for 5 ribs $(daN^2/cm)$ | | | |
|---|---|---|---|---|
| | Witness Tire | | Test Tire | |
| | max.-min. | std. dev. | max.-min. | std. dev. |
| Free Rolling | 0.58 | 0.2020 | 0.98 | 0.3626 |
| Braking | 0.54 | 0.1093 | 0.85 | 0.3186 |
| Driving | 0.65 | 0.2359 | 1.04 | 0.3895 |

These results show a much more non-uniform stress distribution with the test tyre for this second test case.

The results are not greatly modified for the withess tyre running in the opposite direction, although there is more imbalance between maximum and minimum stresses on each rib. These differences can easily be explained by minute irregularities along the circumference of each tyre in the tread pattern as well as the underlying belt package and carcass. Also, measurements of stress are obtained on only a portion of the complete circumference of the tyre. The dispersion between ribs of the test tyre are greatly changed for this second case, being much greater for all torque conditions.

Under normal running conditions the lateral ribs are bias toward braking and the center ribs are bias toward driving. The rotation of the test tyres can either decrease the bias as in the first case, or increase this bias as in the second case.

Actual vehicle tests were conducted with test tyres rotated in the same direction as the first test case on the machine. The test tyres on the drive axles of these vehicles had even wear and lower wear rates when compared with witness tyres. However, non-drive axle test tyres had more uneven wear than the witness tyres. Tests were then conducted with the rotation of the tyres reversed on both axles to be consistend with the second set of tests on the machine. The test tyre had more even wear on the non-drive axle and wear rates were approximately equal between the test tyre and the witness tyre. The drive axle test tyre wear was worse. This surprising result was repeated on several vehicle tests. Although the actual rate of wear on the non-drive axle is frequently one-third of what it is on the drive axle for most driving conditions, uneven wear on this non-drive axle is often a cause for noise and vibration, once initiated, and is not easy to eradicate by a simple tyre permutation between axles of the vehicle. This suggests another utility of this invention being a means of reducing noise and vibration.

Vehicle tests were conducted with the five rib tyre, similar to that illustrated in Figure 1, on a variety of vehicles. The optimum transversal groove inclination for these tyres was approximately 25 degrees for both lateral rib tread blocks and the center rib tread blocks. The inclination of the transversal grooves may have to be modified for different tread patterns depending on various factors ; such a treadcontact surface transverse curvature, the number and relative width of various circumferential ribs, the tread depth, the sub tread thickness, the belt package architecture, the carcass design and the various material properties. The optimum angle of inclination may also be different for tread blocks in the lateral ribs compared with tread blocks in the center ribs. A typical test result for the estimated life of tyres on each axle of a car "Luxury Sedan" are shown below. The front non-drive axle tyres were mounted ot rotate according to the second machine test case and the rear drive axle tyres were mounted opposite for rotation according to the first machine test case.

| | Average Estimated Life for Each Axle, Based on Most Worn Groove of Each Tire : After 15,206 miles | |
|---|---|---|
| AXLE | Test Tires | Witness Tires |
| Front Axle (Non Drving) | 60,500 miles (- 5.8%) | 64,250 miles |
| Rear Axle (Drivin) | 36,500 miles ( + 15,0%) | 31,750 miles |

Visually the test tyres of this test had a considerable better wear aspect that the witness tyres. The heel-toe wear on the front non-drive axle and the center wear on the rear drive axle were visibly better. A lateral tread contact surface radius measurement was also made using a laser beam sensor machine. This measurement shows variations in the transverse profile radius as wear progresses. Results for the test described above are shown below.

| AXLE | Average Transverse Tread Surface Radius For Each Axle (Inflated Tire) | | | |
|---|---|---|---|---|
| | Test Tires | | Witness Tires | |
| | New Tires | After 15,206 Miles | New Tires | After 15,206 Miles |
| Front Axle (Non Driving) | 540.5mm | 540.5 mm | 546.2mm | 447.5 mm |
| Rear Axle (Driving) | 27.0mm | 717.3 mm | 541.0mm | 1039.5 mm |

It is easily seen that there is less variation in the transverse tread contact surface radius for the test tyres than for the witness tyres. Large variations in crown profile tend to accelerate with wear once they are initiated, thus the computed estimated life comparison would be more in favor of the test tyres if the test ran longer than 15,206 miles.

A comparison with the previous test was made using a front wheel drive van type vehicle with the same tyre tread design used in the privous test. These results are shown in the following table.

**EP 0 498 287 B1**

| | Average Estimated Life for Each Axle, Based on Most Worn Groove of Each Tire : After 15,793 miles | |
|---|---|---|
| AXLE | Test Tires | Witness Tires |
| Front Axle( Driving) | 38,457 miles (-23.5%) | 31,131 miles |
| Rear Axle(Non-Driving) | 90,850 miles ( + 10,5%) | 101,527 miles |

Once again, the non-drive axle tyres were monted to rotate according to the second machine test case and the drive axle tyres were mounted opposite for rotation according to the first machine test case. As before, the test tyres have less center wear on the drive axle and less heel-toe wear on the non-drive axle.

**Claims**

1. A pneumatic radial tyre, mounted on a drive axle of a vehicle, comprising a circumferential tread reinforcement, subtread rubber and tread rubber all on a radially reinforced carcass between two bead rings with a tread design comprising at least three circumferential ribs bounded by circumferential grooves (7) wherein said ribs each have a plurality of transversally extending grooves (2, 6) that define a plurality of tread blocks (1, 3, 5, 41, 41, 51, 52) in series within each rib, characterized by the fact that
   a) the transversal grooves (2) in the two lateral zones (A, E) of the tread width are inclined with respect to an outer normal (N) to a tread surface (13, 43, 53) defining inclined tread blocks (1, 41, 51), and each inclined tread block (1, 41, 51) having a leading edge such that the angle ($\theta_1$, $\theta_3$, $\theta_5$) between the leading side surface (14, 44, 54) of said inclined block (1, 41, 51) and the surface of the tread (13, 43,53) be an acute angle ;
   b) the transversal grooves (6) in the center zone (C) of the tread width are reverse inclined with respect to the outer normal (N) to said tread surface, defining reverse inclined tread blocks (5, 42, 52).

2. A pneumatic radial tyre mounted on a non-drive axle of a vehicle, comprising a circumferential tread reinforcement, subtread rubber and tread rubber all on a radially reinforced carcass between two bead rings with a tread design comprising at least three circumferential ribs bounded by circumferential grooves (7) wherein said ribs each have a plurality of transversally extending grooves (2,6) that define a plurality of tread blocks (1, 3, 5, 41, 42, 51, 52) in series within each rib, characterized by the fact that
   a) the transverse grooves (2) in the two lateral zone (A, E) of the tread width are inclined with respect to an outer normal (N) to a tread surface (13, 43, 53), defining inclined tread block (1, 41, 51) ;
   b) the transversal grooves (6) in the center zone (C) of the tread width are reverse inclined with respect to the outer normal (N) to said tread surface, defining reverse inclined tread block having a leading edge such that the angle ($\theta_2$, $\theta_4$, $\theta_6$) between the leading said surface (16, 48, 58) of said reverse inclined blocks (5, 42, 52) and the surface (13, 45, 55) of the tread be an acute angle.

3. A tyre according to claim 1 or 2, characterized by the fact that the tread has three circumferential ribs : two lateral ribs in the two lateral zones (A, E) and one center rib in the center zone C.

4. A tyre according to claim 1 or 2, characterized by the fact that the tread has four circumferential ribs : two lateral ribs in the two lateral zones (A, E), and two center ribs forming the center zone C.

5. A tyre according to claim 1 or 2, characterized by the fact that the tread has five circumferential ribs : two lateral ribs in the two lateral zones (A, E), a center rib in the center zone (C) and two intermediate ribs in the intermediate zones (B, D) in which transversal grooves (4) defining blocks (3) are not inclined with respect to an outer normal (N).

**Patentansprüche**

1. Radialluftreifen zur Montage an einer angetriebenen Achse eines Fahrzeugs, der eine in Umrangsrichtung verlaufende Laufstreifenverstärkung, einen Gummi-Unterprotektor und ein Gummiprofil aufweist die sämtlich aur einer zwischen zwei Wulstkernen vorgesehenen, radial verstärkten Karkasse angeordnet sind, wobei das Laufstreifenprofilmuster mindestens drei Umfangsrippen

8

aufweist, die über Umfangsrillen (7) miteinander verbunden sind, und die Umfangsrippen jeweils eine Vielzahl von sich in Querrichtung erstreckenden Querrillen (2, 6) aufweisen, die eine Vielzahl von innerhalb jeder Umfangsrippe hintereinanderliegenden Profilblöcken (1, 3, 5, 41, 42, 51, 52) vorgeben, **dadurch gekennzeichnet, daß**

a) die Querrillen (2) in den beiden seitlichen Zonen (A, E) der Laufstreifenbreite in Bezug auf eine äußere Normale (N) auf eine Laufstreifenoberfläche (13, 43, 53) geneigt sind und schiefe Profilblöcke (1, 41, 51) vorgeben und jeder schiere Profilblock (1, 41, 51) eine derart angeordnete Vorderkante aufweist, daß der Winkel $\theta_1$, $\theta_3$, $\theta_5$) zwischen seiner Vorderseitenoberfläche (14, 44, 54) und der Laufstreifenoberfläche (13, 43, 53) ein spitzer Winkel ist, und

b) die Querrillen (6) in der mittleren Zone (C) der Laufstreifenbreite in Bezug auf die äußere Normale (N) aus die Laufstreifenoberfläche in umgekehrter Richtung geneigt sind und in umgekehrter Richtung schiefe Profilblöcke (5, 42, 52) vorgeben.

2. Radialluftreifen zur Montage an einer <u>nicht</u> angetriebenen Achse eines Fahrzeuges, der eine in Umfangsrichtung verlaufende Laufstreifenverstärkung, einen Gummi-Unterprotektor und ein Gummiprofil aufweist, die sämtlich aur einer zwischen zwei Wulstkernen vorgesehenen, radial verstärkten Karkasse angeordnet sind, wobei das Laufstreifenprofilmuster mindestens drei Umfangsrippen aufweist, die über Umfangsrillen (7) miteinander verbunden sind, und die Umfangsrippen jeweils eine Vielzahl von sich in Querrichtung erstreckenden Querrillen (2, 6) aufweisen, die eine Vielzahl von innerhalb jeder Umfangsrippe hintereinanderliegenden Profilblöcken (1, 3, 5, 41, 42, 51, 52) vorgeben, dadurch gekennzeichnet, daß

a) die Querrillen (2) in den beiden seitlichen Zonen (A, E) der Laufstreifenbreite in Bezug auf eine äußere Normale (N) auf eine Laufstreifenoberfläche (13, 43, 53) geneigt sind und schiefe Profilblöcke (1, 41, 51) vorgeben, und

b) die Querrillen (6) in der mittleren Zone (C) der Laufstreifenbreite in Bezug auf die äußere Normale (N) auf die Laufstreifenoberfläche in umgekehrter Richtung geneigt sind und in umgekehrter Richtung schiere Profilblöcke (5, 42, 52) vorgeben, die eine derart angeordnete Vorderkante aufweisen, daß der Winkel ($\theta_2$, $\theta_4$, $\theta_6$) zwischen ihrer Vorderseitenoberfläche (16, 48, 58) und der Laufstreifenoberfläche (13, 45, 55) ein spitzer Winkel ist.

3. Reifen nach Anspruch 1 oder 2,
dadurch gekennzeichnet, daß der Laufstreifen drei Umfangsrippen aufweist: Zwei seitliche Umfangsrippen in den beiden seitlichen Zonen (A, E) und eine mittlere Umfangsrippe in der mittleren Zone (C).

4. Reifen nach Anspruch 1 oder 2,
dadurch gekennzeichnet daß der Laufstreifen vier Umfangsrippen aufweist: Zwei seitliche Umfangsrippen in den beiden seitlichen Zonen (A, E) und zwei mittlere Umfangsrippen, welche die mittlere Zone (C) bilden.

5. Reifen nach Anspruch 1 oder 2,
dadurch gekennzeichnet, daß der Laufstreifen fünf Umfangsrippen aufweist: Zwei seitliche Umfangsrippen in den beiden seitlichen Zonen (A, E), eine mittlere Umfangsrippe in der mittleren Zone (C) und zwei Zwischen-Umfangsrippen in den Zwischenzonen (B, D), in denen Querrillen (4) die Profilblöcke (3) vorgeben, in Bezug auf eine äußere Normale (N) nicht geneigt sind.

**Revendications**

1. Un pneumatique radial, monté sur l'essieu moteur d'un véhicule, comprenant un renforcement longitudinal de la bande de roulement, une sous-couche et une bande de roulement disposés sur une carcasse radiale entre deux tringles avec une sculpture comprenant au moins trois nervures longitudinales délimitées par des sillons (7) et comportant plusieurs rainures (2, 6) qui définissent des pains de gomme (1, 3, 5, 41,42, 51, 52) disposés en séries dans les nervures, caractérisé en ce que :

a) les rainures (2) des deux zones latérales (A, E) de la bande de roulement sont inclinées par rapport à une perpendiculaire (N) à la surface de la bande de roulement (13, 43, 53) et définissent des pains de gomme inclinés (1, 41, 51), chaque pain de gomme incliné (1, 41, 51) ayant un bord d'attaque tel que l'angle($\theta_1$, $\theta_3$, $\theta_5$) entre la paroi d'attaque (14, 44, 54) dudit pain incliné (1, 41,51) et la surface de la bande de roulement (13, 43, 53) soit un angle aigu ;

b) les rainures (6) de la zone centrale (C) de la bande de roulement sont inclinées en sens inverse par rapport à une perpendiculaire (N) à ladite surface de la bande de roulement et définissent des pains de gomme inclinés en sens inverse (5, 42, 52).

2. Un pneumatique radial, monté sur l'essieu non-moteur d'un véhicule, comprenant un renforcement longitudinal de la bande de roulement, une sous-couche et une bande de roulement disposés sur une carcasse radiale entre deux tringles avec une sculpture comprenant au moins trois nervures longitudinales délimitées par des sillons (7) et comportant plusieurs rainures (2, 6) qui définissent des pains de gomme (1, 3, 5, 41, 42, 51, 52) disposés en séries dans les nervures, caractérisé en ce que :

a) les rainures (2) des deux zones latérales (A, E) de la bande de roulement sont inclinées par rapport à une perpendiculaire (N) à la surface de la bande de roulement (13, 43, 53) et définissent des pains de gomme inclinés (1, 41, 51);

b) les rainures (6) de la zone centrale (C) de la bande de roulement sont inclinées en sens inverse par rapport à une perpendiculaire (N) à ladite surface de la bande de roulement et définissent des pains de gomme inclinés en sens inverse ayant un bord d'attaque tel que l'angle ($\theta_2$, $\theta_4$, $\theta_6$) entre ladite surface avant (16, 48, 58) dudit pain incliné en sens inverse (5, 42, 52) et la surface de la bande de roulement (13, 45, 55) soit un angle aigu.

3. Un pneumatique conforme à la revendication 1 ou 2 caractérisé en ce que la bande de roulement comporte trois nervures longitundinales : deux nervures latérales dans les deux zones latérales (A, E) et une nervure centrale dans la zone centrale C.

4. Un pneumatique conforme à la revendication 1 ou 2, caractérisé en ce que la bande de roulement comporte quatre nervures longitudinales : deux nervures latérales dans les deux zones latérales (A, E) et deux nervures centrales dans la zone centrale C.

5. Un pneumatique conforme à la revendication 1 ou 2, caractérisé en ce que la bande de roulement comporte cinq nervures longitudinales : deux nervures latérales dans les deux zones latérales (A, E) et une nervure centrale dans la zone centrale (C), et deux nervures intermédiaires dans les zones intermédiaires (B, D) dans lesquelles les rainures (4) définissant les pains (3) ne sont pas inclinées par rapport à une perpendiculaire (N).

FIG. 1

Fig. 2 EE

Fig. 2 DD

Fig. 2 CC

Fig. 2 BB

Fig. 2 AA

FIG 2

FIG 3

FIG 4

FIG 5